(19) Europäisches Patentamt
European Patent Office
Office européen des brevets

(11) Veröffentlichungsnummer: **0 025 774**
**B1**

# (12) EUROPÄISCHE PATENTSCHRIFT

(45) Veröffentlichungstag der Patentschrift: **29.06.83**

(51) Int. Cl.³: **C 07 F 9/165,** C 07 F 9/21, C 10 M 1/48

(21) Anmeldenummer: **80810288.3**

(22) Anmeldetag: **12.09.80**

(54) **Dithiophosphate, ihre Herstellung und sie enthaltende Schmiermittel.**

(30) Priorität: **18.09.79 CH 8418/79**

(43) Veröffentlichungstag der Anmeldung: **25.03.81 Patentblatt 81/12**

(45) Bekanntmachung des Hinweises auf die Patenterteilung: **29.06.83 Patentblatt 83/26**

(84) Benannte Vertragsstaaten: **BE DE FR GB IT NL**

(56) Entgegenhaltungen:
**DE-A-1 908 306**
**GB-A-1 506 917**
**US-A-2 976 308**
**US-A-3 017 422**
**US-A-3 745 148**
**US-A-4 132 702**

(73) Patentinhaber: **CIBA-GEIGY AG, Patentabteilung Postfach, CH-4002 Basel (CH)**

(72) Erfinder: **Rosenberger, Siegfried, Im Gehracker 11, CH-4125 Riehen (CH)**

**EP 0 025 774 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Dithiophosphate

Die vorliegende Erfindung betrifft Dithiophosphate, deren Verwendung als Schmiermittelzusätze, deren Herstellung sowie die mit den neuen Verbindungen ausgerüsteten Schmiermittel.

Mineralischen und synthetischen Schmiermitteln werden im allgemeinen verschiedene Zusatzstoffe zur Verbesserung ihrer Gebrauchseigenschaften beigegeben; insbesondere besteht ein Bedarf an Additiven, welche die zu schmierenden Vorrichtungen vor Reibungsabnützung schützen sollen. An solche Verschleissinhibitoren wird die Anforderung gestellt, dass sie das Lasttragevermögen der Schmierstoffe erhöhen und nicht korrodierend auf die zu schützenden Metallteile wirken. Aus dem US-Patent Nr. 3 017 422, dem GB-Patent Nr. 1 506 917 und dem US-Patent Nr. 3 745 148 sind phenolhaltige Dithiophosphate als Schmiermittelzusätze beschrieben worden. Diese genügen allerdings den hohen Anforderungen, welche an ein Hochdruck- und Antiwear-Additiv gestellt werden, nicht oder nur teilweise. Insbesondere sind dem GB-Patent Nr. 1 506 917, Beispiele IV–VII, keinerlei Anregungen zu entnehmen, weitere Versuche zur Herstellung von p-Hydroxyphenyl-alkylen-dithiophosphorsäure-O,O-dialkylestern durchzuführen, um dieselben dann als Schmiermittelzusätze zu verwenden.

Es wurde nun eine Klasse phenolhaltiger Dithiophosphate gefunden, in welchen der Dithiophosphat-Teil auf ganz bestimmte Weise mit dem phenolischen Molekülteil verknüpft ist. Diese Verbindungen entfalten in Schmiermitteln neben guter Antioxidations- und Antikorrosionswirkung ausgezeichnete extreme pressure- und Antiwear-Eigenschaften. Daneben zeichnen sich die neuen Verbindungen durch geringe Schlammbildung und keine Aschebildung aus.

Die neuen Verbindungen entsprechen der allgemeinen Formel I

(I) 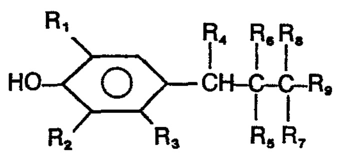

worin $R_1$ und $R_2$ unabhängig voneinander $C_1$–$C_{12}$ Alkyl, gegebenenfalls mit 1 bis 3 Alkylgruppen mit insgesamt 1 bis 12 C-Atomen substituiertes Phenyl, $C_7$–$C_9$ Aralkyl oder $C_5$–$C_7$ Cycloalkyl bedeuten und $R_2$ zusätzlich Wasserstoff oder Chlor ist, und $R_3$ Wasserstoff oder Methyl bedeutet, und $R_4$, $R_6$ und $R_8$ unabhängig voneinander Wasserstoff oder $C_1$–$C_{20}$ Alkyl bedeuten, mit der Bedingung, dass $R_4$, $R_6$ und $R_8$ als Alkyl zusammen insgesamt 1–20 C-Atome besitzen, und $R_9$ Wasserstoff, Methyl oder Halogen ist, und einer der Reste $R_5$ und $R_7$ eine Gruppe der Formel II

(II) 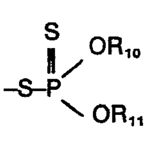

bedeutet und der andere Wasserstoff ist, wobei $R_{10}$ und $R_{11}$ unabhängig voneinander $C_1$–$C_{30}$ Alkyl oder $C_2$–$C_{10}$ Alkoxyalkyl sind, oder $R_{10}$ und $R_{11}$ zusammen eine Gruppe der Formel III

(III) $-(R_{12})C(R_{13})-[(R_{14})C(R_{15})]_m-(R_{16})C(R_{17})-$

bedeuten, worin m 0 oder 1 ist und $R_{12}$, $R_{13}$, $R_{14}$, $R_{15}$, $R_{16}$ und $R_{17}$ unabhängig voneinander Wasserstoff oder Methyl sind.

$R_1$ und $R_2$ sind als $C_1$–$C_{12}$ Alkyl z.B. Methyl, Äthyl, Isopropyl, sek.-Butyl, tert.-Butyl, tert.-Amyl, n-Hexyl, 1,1,3,3-Tetramethylbutyl, oder 1,1,3,3,5,5-Hexamethylhexyl. Bevorzugte Alkylgruppen besitzen 1 bis 8 C-Atome, $R_1$ ist ferner in bevorzugten Verbindungen tert.-Butyl, tert.-Amyl oder 1,1,3,3-Tetramethylbutyl.

Sind $R_1$ und $R_2$ $C_7$–$C_9$ Aralkyl, so kann es sich um Benzyl, α-Phenyläthyl oder α,α-Dimethylbenzyl handeln.

Bedeuten $R_1$ und $R_2$ $C_5$–$C_7$ Cycloalkyl, so handelt es sich um Cyclopentyl, Cyclohexyl oder Cycloheptyl.

$R_1$ und $R_2$ können als Phenyl, Aralkyl und Cycloalkyl mit 1 bis 3 Alkylgruppen mit insgesamt 1 bis 12 C-Atomen substituiert sein. Beispiele solcher Alkylsubstituenten sind Methyl, Äthyl, Isopropyl, n-Butyl, sek.-Butyl, tert.-Butyl, n-Hexyl, 1,1,3,3-Tetramethylbutyl, n-Nonyl, 1,1,3,3,5,5,-Hexamethylhexyl oder n-Dodecyl.

Die bevorzugte Bedeutung von $R_3$ ist Wasserstoff.

$R_4$, $R_6$ und $R_8$ sind als $C_1$–$C_{20}$ Alkyl beispielsweise Methyl, Äthyl, Isopropyl, sek.-Butyl, n-Hexyl, 2,2,4,4-Tetramethylpentyl, geradkettiges oder verzweigtes Dodecyl, Tetradecyl, Octadecyl oder Eicosyl. Bevorzugte Alkylgruppen besitzen 1 bis 6 C-Atome, besonders bevorzugt sind Äthylgruppen und insbesondere Methylgruppen. $R_9$ in der Bedeutung von Halogen ist insbesondere Chlor.

Die Summe der in den Substituenten enthaltenen C-Atome soll insgesamt 1 bis 20, bevorzugt 1 bis 6 und insbesondere 1 bis 2 sein. Unter den wichtigsten Verbindungen der Formel I sind solche, wo einer der Reste $R_4$, $R_6$ und $R_8$ Wasserstoff ist und die beiden übrigen Methyl bedeuten, ferner solche, in welchen zwei der Reste $R_4$, $R_6$ und $R_8$ Wasserstoff sind und das dritte Methyl bedeutet, und letztlich solche, in welchen $R_4$, $R_6$ und $R_8$ Wasserstoff bedeuten.

Sind $R_{10}$ und $R_{11}$ $C_1$–$C_{30}$ Alkyl, so kann es sich z.B. um Methyl, Äthyl, n-Propyl, Isopropyl, n-Butyl, sek.-Butyl, tert.-Butyl, n-Hexyl, n-Octyl, 2-Äthylhexyl, 6-Methylheptyl, n-Octyl oder geradkettiges oder verzweigtes Nonyl, Decyl, Dodecyl, Tridecyl, Tetradecyl, Octadecyl, Eicosyl, Docosyl, Tetracosyl oder Triacontyl handeln. Besonders bei langkettigen Alkylgruppen handelt es sich in der Regel um Isomerengemische.

Bedeuten $R_{10}$ und $R_{11}$ $C_2$–$C_{10}$ Alkoxyalkyl, so kann der Alkylteil 1 bis 3 C-Atome enthalten und der Alkoxyteil aus 1 bis 8 C-Atomen bestehen, wie

z. B. in Methoxymethyl, Äthoxymethyl, 2-Methoxyäthyl, 2-Äthoxyäthyl, 2-n-Butoxyäthyl, 3-n-Butoxypropyl, 2-Octoxyäthyl oder Methoxypropyl.

Bedeuten $R_{10}$ und $R_{11}$ zusammen eine Alkylengruppe der Formel V, so handelt es sich beispielsweise um Alkylen-1,2; wie 1-Methyläthylen-1,2; 1,1-Dimethyläthylen-1,2; 1,1,2-Trimethyläthylen-1,2; 1,1,2,2-Tetramethyläthylen-1,2; Propylen-1,3; 1-Methylpropylen-1,3; 1,1,3-Trimethylpropylen-1,3 und 2,2-Dimethylpropylen-1,3.

Bevorzugte Verbindungen entsprechen der Formel I, worin $R_1$ und $R_2$ unabhängig voneinander $C_1$–$C_8$ Alkyl und $R_2$ zusätzlich Wasserstoff bedeutet und $R_3$ Wasserstoff oder Methyl ist, und $R_4$, $R_6$ und $R_8$ unabhängig voneinander Wasserstoff oder $C_1$–$C_6$ Alkyl sind, mit der Bedingung, dass $R_4$, $R_6$ und $R_8$ als Alkyl zusammen insgesamt 1–6 C-Atome besitzen und $R_9$ Wasserstoff ist, und einer der Reste $R_5$ und $R_7$ eine Gruppe der Formel II und der andere Wasserstoff ist, wobei $R_{10}$ und $R_{11}$ unabhängig voneinander $C_1$–$C_{22}$ Alkyl sind, oder $R_{10}$ und $R_{11}$ zusammen eine Gruppe der Formel III bedeuten, worin m und $R_{12}$ bis $R_{17}$ die oben angegebene Bedeutung haben.

Besonders bevorzugte Verbindungen entsprechen der Formel I, worin $R_1$ tert.-Butyl, tert.-Amyl oder 1,1,3,3-Tetramethylbutyl ist und $R_2$ $C_1$–$C_8$ Alkyl bedeutet, und $R_3$ Wasserstoff ist und $R_4$, $R_6$ und $R_8$ unabhängig voneinander Wasserstoff, Methyl oder Äthyl sind, mit der Bedingung, dass $R_4$, $R_6$ und $R_8$ als Alkyl insgesamt 1–2 C-Atome besitzen und $R_9$ Wasserstoff ist, und einer der Reste $R_5$ und $R_7$ eine Gruppe der Formel II und der andere Wasserstoff ist, wobei $R_{10}$ und $R_{11}$ unabhängig voneinander $C_1$–$C_{22}$ Alkyl sind, oder zusammen eine Gruppe der Formel III bedeuten, worin m und $R_{12}$ bis $R_{17}$ die oben angegebene Bedeutung haben.

Typische Vertreter der erfindungsgemässen Stoffklasse sind beispielsweise:

(IV) 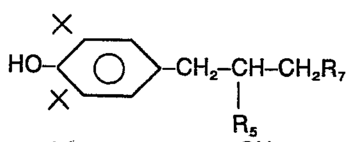

(V) 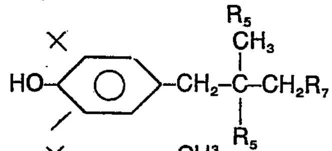

(VI) 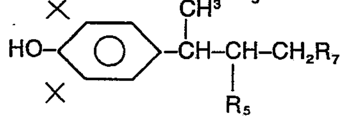

(VII) 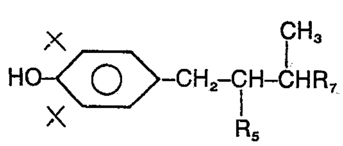

(VIII) 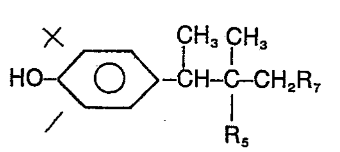

In den Formeln IV bis VIII ist einer der Reste $R_5$ und $R_7$ Wasserstoff und der andere eine Gruppe der Formel II, worin $R_{10}$ und $R_{11}$ folgende Bedeutung haben:

| Nr. | $R_{10}$ | $R_{11}$ |
|---|---|---|
| IV–VIII 1.a/b | Isopropyl | Isopropyl |
| IV–VIII 2.a/b | 2-Äthylhexyl | 2-Äthylhexyl |
| IV–VIII 3.a/b | Methyl | Methyl |
| IV–VIII 4.a/b | Octadecyl | n-Butyl |
| IV–VIII 5.a/b | Docosyl | Docosyl |
| IV–VIII 6.a/b | Tridecyl | Tridecyl |

| Nr. | $R_{10} + R_{11}$ |
|---|---|
| IV–VIII 7.a/b | 1,1,3-Trimethylpropylen-1,3 |
| IV–VIII 8.a/b | 2,2-Dimethylpropylen-1,3 |
| IV–VIII 9.a/b | Äthylen-1,2 |

Als Verbindungen a) sind solche bezeichnet, in welchen $R_5$ Wasserstoff ist und $R_7$ eine Gruppe der Formel II ist, in welcher $R_{10}$ und $R_{11}$ die in der Tabelle angegebene Bedeutung haben. Als Verbindungen b) sind solche bezeichnet, in welchen $R_5$ eine Gruppe der Formel II ist, wobei $R_{10}$ und $R_{11}$ die angegebene Bedeutung haben und $R_7$ Wasserstoff ist.

Die Herstellung der Verbindungen der Formel I erfolgt auf an sich bekannte Weise, z. B. durch die Addition einer Verbindung der Formel IX

(IX) 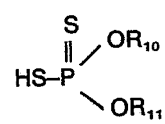 ,

worin $R_{10}$ und $R_{11}$ die oben angegebene Bedeutung haben, an ein Alken der Formel X

(X) 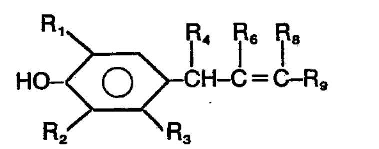 ,

worin die Symbole $R_1$, $R_2$, $R_3$, $R_4$, $R_6$, $R_8$ und $R_9$ die oben angegebene Bedeutung haben.

Die Addition kann in einem inerten Lösungsmittel oder vorzugsweise ohne Lösungsmittel bei Temperaturen von 0–180 °C, insbesondere 50–150 °C, und gegebenenfalls in Gegenwart eines Radikal-Initiators vorgenommen werden.

Als Lösungsmittel eignen sich gegebenenfalls chlorierte, aliphatische oder aromatische Kohlenwasserstoffe, wie Spezialbenzine, Hexan, Heptan, Methylenchlorid, 1,2-Dichloräthan, Benzol, Chlorbenzol, Dichlorbenzol, Toluol, Xylol; oder Äther, wie Diäthyläther, Dioxan oder Tetrahydrofuran.

Für die radikalisch katalysierte Additionsreaktion verwendbare Radikal-Initiatoren sind z. B. insbesondere Per- und Azo-Verbindungen sowie UV-Licht. Gebräuchliche Perverbindungen sind Wasserstoffperoxid, Di-tert.-butylperoxid, Cumolhydroperoxid oder Dibenzoylperoxid. Als Azoverbin-

dung eignet sich insbesondere α,α'-Azodiisobuttersäurenitril.

Bei der beschriebenen Additionsreaktion entsteht neben jener Verbindung der Formel I, in welcher $R_6$ Wasserstoff und $R_7$ eine Gruppe der Formel II bedeutet, in der Regel die isomere Verbindung der Formel I, in welcher $R_6$ eine Gruppe der Formel II ist und $R_7$ Wasserstoff bedeutet. Die Trennung der Isomeren erfolgt auf an sich bekannte Weise. Für die Anwendung als Schmiermittelzusätze wird jedoch meistens das Isomerengemisch direkt eingesetzt.

Die Verbindungen der Formel IX sind bekannte Verbindungen und vielfach handelsüblich.

Die Verbindungen der Formel X sind ebenfalls bekannt oder können, falls sie neu sind, auf an sich bekannte Weise hergestellt werden. Eine Methode zu ihrer Herstellung ist z.B. im US-Patent Nr. 3 526 668 beschrieben.

Die Verbindungen der Formel I wirken schon in sehr geringen Mengen als Hochdruck-Zusätze in Schmiermitteln. So zeigen mineralische und synthetische Schmieröle, sowie deren Gemische, welche mit 0,001 bis 5 Gew.-%, bezogen auf das Schmiermittel, und vorzugsweise 0,02 bis 3% einer Verbindung der Formel I ausgestattet sind, ausgezeichnete Hochdruck-Schmiereigenschaften, welche durch stark reduzierte Abnutzungserscheinungen der zu schmierenden Reibpartner deutlich werden. Die in Frage kommenden Schmiermittel sind dem Fachmann geläufig und z.B. im «Schmiermittel Taschenbuch» (Hüthig Verlag, Heidelberg, 1974) beschrieben.

Die Schmierölformulierung kann zusätzlich noch andere Additive enthalten, die zugegeben werden, um gewisse Grundöleigenschaften zu verbessern, wie Antioxidantien, Metallpassivatoren, Rostinhibitoren, Viskositätsindex-Verbesserer, Stockpunkterniedriger, Dispersants/Detergents und andere Verschleissschutz-Additive.

Beispiele für Antioxidantien sind:

a) Alkylierte und nichtalkylierte aromatische Amine und Mischungen davon z.B.: Dioctyldiphenylamin, Mono-t-octylphenyl-α- und -β-naphthylamine, Phenothiazin, Dioctylphenothiazin, Phenyl-α-naphthylamin, N,N'-Di-sec.-butyl-p-phenylendiamin.

b) Sterisch gehinderte Phenole, z.B. 2,6-Di-tert.-butyl-p-cresol, 4,4'-Bis-(2,6-diisopropylphenol), 2,4,6-Triisopropylphenol, 2,2'-Thio-bis-(4-methyl-6-tert.-butyl-phenol), 4,4'-Methylen-bis-(2,6-di-tert.-butylphenol).

c) Alkyl-, Aryl- oder Alkaryl-phosphite, z.B.: Trinonylphosphit, Triphenylphosphit, Diphenyldecylphosphit.

d) Ester von Thiodipropionsäure oder Thiodiessigsäure, z.B.: Dilaurylthiodipropionat oder Dioctylthiodiacetat.

e) Salze von Carbamin- und Dithiophosphorsäuren, z.B.: Antimon-diamyldithiocarbamat, Zink diamyldithiophosphat.

f) Kombinationen von zwei oder mehr Antioxidantien der obigen, z.B.: ein alkyliertes Amin und ein sterisch gehindertes Phenol.

Beispiele für Metallpassivatoren sind:

a) Für Kupfer, z.B. Benzotriazol, Tetrahydrobenzotriazol, 2-Mercaptobenzothiazol, 2,5-Dimercaptothiadiazol, Salicylidenpropylendiamin, Salze von Salicylaminoguanidin.

b) Für Blei, z.B. Sebacinsäurederivate, Chinizarin, Propylgallat.

c) Kombination von zwei oder mehr der obigen Additive.

Beispiele für Rost-Inhibitoren sind:

a) Organische Säuren, ihre Ester, Metallsalze und Anhydride, z.B.: N-Oleoyl-sarcosin, Sorbitanmono-oleat, Blei-naphthenat, Dodecenylbernsteinsäure-anhydrid.

b) Stickstoffhaltige Verbindungen, z.B.:

I. Primäre, sekundäre oder tertiäre aliphatische oder cycloaliphatische Amine und Aminsalze von organischen und anorganischen Säuren, z.B. öllösliche Alkylammoniumcarboxylate.

II. Heterocyclische Verbindungen, z.B.: Substituierte Imidazoline und Oxazoline.

c) Phosphorhaltige Verbindungen, z.B.: Aminsalze von Phosphorsäurepartialestern.

d) Schwefelhaltige Verbindungen, z.B.: Barium-dinonylnaphthalin-sulfonate, Calcium-petroleum-sulfonate.

e) Kombinationen von zwei oder mehr der obigen Additive.

Beispiele für Viskositätsindex-Verbesserer sind z.B.: Polymethacrylate, Vinylpyrrolidon/Methacrylat-Copolymere, Polybutene, Olefin-Copolymere, Styril/Acrylat-Copolymere.

Beispiele für Stockpunkterniedriger sind z.B.: Polymethacrylate, alkylierte Naphthalinderivate.

Beispiele für Dispersants/Detergents sind z.B.: Polybutenylbernsteinsäure-imide, Polybutenylphosphonsäurederivate, überbasische Magnesium-, Calcium- und Bariumsulfonate und -phenolate.

Beispiele für andere Verschleissschutz-Additive sind z.B.: Schwefel und/oder Phosphor und/oder Halogen enthaltende Verbindungen, wie geschwefelte vegetabilische Öle, Zinkdialkyldithiophosphate, Tritolyl-phosphat, chlorierte Paraffine, Alkyl- und Aryldisulfide.

Die folgenden Beispiele erläutern die Erfindung.

Beispiel 1

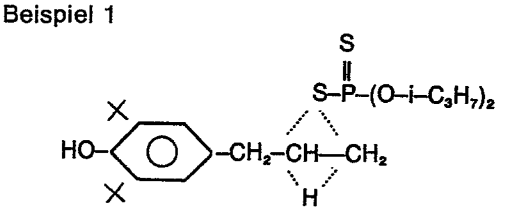

246 g 3-(3,5-Di-t-butyl-4-hydroxyphenyl)-propylen werden unter Stickstoff mit 214 g Dithiophosphorsäure-O,O-diisopropylester versetzt und unter Zugabe von 1 g Azodiisobuttersäurenitril in mehreren Portionen unter Rühren 8–10 Stunden auf 90–110 °C erhitzt. Am Ende der Reaktionszeit ist praktisch kein Olefin (Dünnschichtchromatographie) mehr nachweisbar.

Die Substanz wird im Vakuum (~2·$10^2$Pa) von leicht flüchtigen Verunreinigungen befreit. Das so erhaltene Isomerengemisch bildet ein schwach bräunliches, viskoses Öl und ist für die erfindungsgemässe Verwendung als Schmiermittel-Additiv direkt einsetzbar.

Beispiel 2

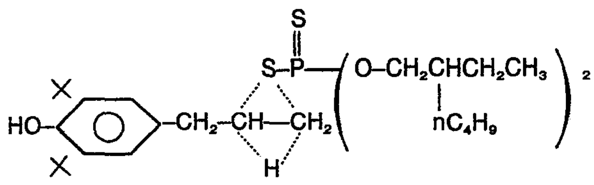

Ersetzt man den Diisopropylester von Beispiel 1 durch die entsprechende Menge an Dithiophosphorsäure-di-2-äthyl-n-hexylester, so erhält man bei analoger Arbeitsweise das oben wiedergegebene Isomerengemisch als viskoses, fast farbloses Öl.

Beispiel 3

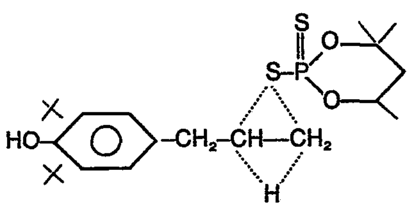

Unter Verwendung des entsprechend cyclischen O,O-Diesters der Dithiophosphorsäure mit 1,1,3-Trimethyl-1,3-dihydroxypropan erhält man analog Beispiel 1 das oben wiedergegebene Isomerengemisch als viskoses, fast farbloses Öl.

Beispiel 4

Mit dem Shell-Vierkugel-Apparat wurden folgende Werte bestimmt: (Tentative method IP 239/69, Extense pressure and wear lubricant test for oils and greases, four ball-machine).

1. I.S.L.: Initial Seizure Load: Das ist die Last, bei der der Ölfilm innerhalb einer Belastungsdauer von 10 Sekunden zusammenbricht.

2. W.L. = Weld Load (Schweisslast). Das ist die Last, bei der die 4 Kugeln innerhalb von 10 Sekunden zusammenschweissen.

3. W.S.D. = Wear Scar Diameter in mm: Das ist der mittlere Verschleissdurchmesser bei einer Belastung von 40 kg während 1 Stunde.

Als Basisöl wurde Vitrea 41 (Handelsbezeichnung der Firma Shell) verwendet.

Konzentration des Stabilisators: 1 Gew.-%.

Tabelle:

| Stabilisator | ISL (kg) | W1 (kg) | WSD (mm) |
|---|---|---|---|
| ohne | ca. 60 | ca. 160 | ca. 2,4 |
| Beispiel 1 | 100 | 240 | 0,4 |
| Beispiel 2 | 100 | 220 | 0,4 |

Beispiel 5

Öl-Oxidations-Test, Standard-Version nach ASTM D 2272 (Rotary Bomb Oxidation Test)

Eine Ölprobe von 50 ml Mineralöl Marke «Vitrea 41» der Firma Shell wird unter Zusatz von 0,25 g Stabilisator in einem Glasgefäss zusammen mit 5 ml destilliertem Wasser und einer blankpolierten, mit Petroläther gewaschenen, katalytisch wirkenden Cu-Spirale in einer Sauerstoff-Atmosphäre oxydiert.

Das Glasgefäss befindet sich in einer Bombe aus rostfreiem Stahl mit Manometer. Die Bombe dreht sich axial mit 100 U./Min. in einem Winkel von 30° zur Horizontalen in einem Ölbad bei 150 °C. Der Sauerstoffdruck beträgt anfangs vor dem Aufheizen ca. 6,2·$10^5$ Pa (90 psi), steigt bei 150 °C auf knapp 1,38·$10^6$ Pa (200 psi) und bleibt bis zur einsetzenden Oxidation konstant. Die Prüfung ist beendet bei einem Druckabfall um 1,72·$10^5$ Pa (25 psi). Aufgezeichnet wird die Zeit in Minuten.

Prüfergebnisse:

| Stabilisator | Minuten bis Druckabfall um 25 psi (1,72 · $10^5$Pa) |
|---|---|
| ohne | 16 |
| Beispiel 1 | 193 |
| Beispiel 2 | 120 |

Beispiel 6

Öl-Oxidations-Test nach IP 280, «CIGRE»

Modifizierte Version mit löslichem Cu- und Fe-Katalysator.

Bedingungen: 4 Stunden Sauerstoff einleiten bei 150 °C (4 Liter $O_2$/h).

Bestimmung der Säurezahl nach Testende; Tabellenwert: mg KOH-Verbrauch pro g Testöl.

Stabilisatorkonzentration: 0,5 Gew.-%.

Testöl: Mineralöl der Marke «Vitrea 41» der Firma Shell.

Tabelle:

| Stabilisator | mg KOH/g |
|---|---|
| ohne | 3,6 |
| Beispiel 1 | 1,45 |
| Beispiel 2 | 1,22 |

**Patentansprüche**

1. Verbindungen der allgemeinen Formel I

(I) 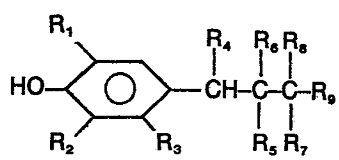

worin $R_1$ und $R_2$ unabhängig voneinander $C_1$–$C_{12}$ Alkyl, gegebenenfalls mit 1 bis 3 Alkylgruppen mit insgesamt 1 bis 12 C-Atomen substituiertes Phe-

nyl, $C_7$–$C_9$ Aralkyl oder $C_5$–$C_7$ Cycloalkyl bedeuten und $R_2$ zusätzlich Wasserstoff oder Chlor ist, und $R_3$ Wasserstoff oder Methyl bedeutet, und $R_4$, $R_6$ und $R_8$ unabhängig voneinander Wasserstoff oder $C_1$–$C_{20}$ Alkyl bedeuten, mit der Bedingung, dass $R_4$, $R_6$ und $R_8$ als Alkyl zusammen insgesamt 1–20 C-Atome besitzen und $R_9$ Wasserstoff, Methyl oder Halogen ist, und einer der Reste $R_5$ und $R_7$ eine Gruppe der Formel II

(II) 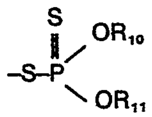

bedeutet und der andere Wasserstoff ist, wobei $R_{10}$ und $R_{11}$ unabhängig voneinander $C_1$–$C_{30}$ Alkyl oder $C_2$–$C_{18}$ Alkoxyalkyl sind, oder $R_{10}$ und $R_{11}$ zusammen eine Gruppe der Formel III

(III) $-(R_{12})C(R_{13})-[(R_{14})C(R_{15})]_m-(R_{16})C(R_{17})-$

bedeuten, worin m 0 oder 1 ist und $R_{12}$, $R_{13}$, $R_{14}$, $R_{15}$, $R_{16}$ und $R_{17}$ unabhängig voneinander Wasserstoff oder Methyl sind.

2. Verbindungen gemäss Anspruch 1 der Formel I, worin $R_1$ und $R_2$ unabhängig voneinander $C_1$–$C_8$ Alkyl und $R_2$ zusätzlich Wasserstoff bedeutet und $R_3$ Wasserstoff oder Methyl ist, und $R_4$, $R_6$, und $R_8$ unabhängig voneinander Wasserstoff oder $C_1$–$C_6$ Alkyl sind, mit der Bedingung, dass $R_4$, $R_6$ und $R_8$ als Alkyl zusammen insgesamt 1–6 C-Atome besitzen und $R_9$ Wasserstoff ist und einer der Reste $R_5$ und $R_7$ eine Gruppe der Formel II und der andere Wasserstoff ist, wobei $R_{10}$ und $R_{11}$ unabhängig voneinander $C_1$–$C_{22}$ Alkyl sind, oder $R_{10}$ und $R_{11}$ zusammen eine Gruppe der Formel III bedeuten, worin m und $R_{12}$ bis $R_{17}$ die im Anspruch 1 angegebene Bedeutung haben.

3. Verbindungen gemäss Anspruch 1 der Formel I, worin $R_1$ tert.-Butyl, tert.-Amyl oder 1,1,3,3-Tetramethylbutyl ist, und $R_2$ $C_1$–$C_8$ Alkyl bedeutet, und $R_3$ Wasserstoff ist und $R_4$, $R_6$ und $R_8$ unabhängig voneinander Wasserstoff, Methyl oder Äthyl sind, mit der Bedingung, dass $R_4$, $R_6$ und $R_8$ als Alkyl insgesamt 1–2 C-Atome besitzen und $R_9$ Wasserstoff ist, und einer der Reste $R_5$ und $R_7$ eine Gruppe der Formel II und der andere Wasserstoff ist, wobei $R_{10}$ und $R_{11}$ unabhängig voneinander $C_1$–$C_{22}$ Alkyl sind, oder zusammen eine Gruppe der Formel III bedeuten, worin m und $R_{12}$ bis $R_{17}$ die im Anspruch 1 angegebene Bedeutung haben.

4. Verbindungen gemäss Anspruch 1 der Formel I, worin zwei der Reste $R_4$, $R_6$ und $R_8$ Wasserstoff sind und der dritte Methyl bedeutet.

5. Verbindungen gemäss Anspruch 1 der Formel I, worin einer der Reste $R_4$, $R_6$ und $R_8$ Wasserstoff ist und die beiden übrigen Methyl bedeuten.

6. Verbindungen gemäss Anspruch 4 der Formel I, worin $R_4$ Methyl ist und $R_6$ und $R_8$ Wasserstoff bedeuten.

7. Verbindungen gemäss Anspruch 4 der Formel I, worin $R_6$ Methyl ist und $R_4$ und $R_8$ Wasserstoff bedeuten.

8. Verbindungen gemäss Anspruch 4 der Formel I, worin $R_8$ Methyl ist und $R_4$ und $R_6$ Wasserstoff sind.

9. Verbindungen gemäss Anspruch 1 der Formeln

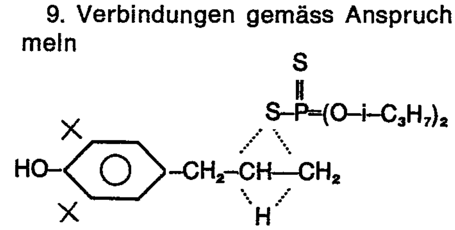 ,

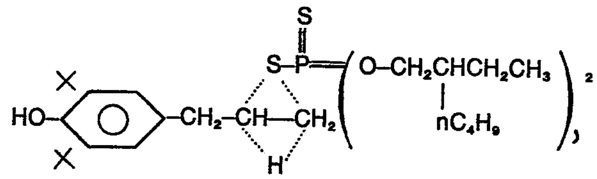

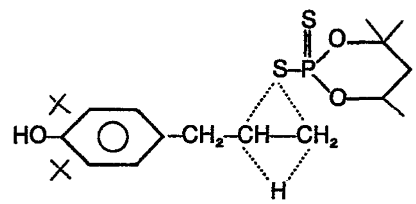 .

10. Schmiermittel, enthaltend eine Verbindung der Formel I gemäss Anspruch 1.

11. Verfahren zum Herstellen von Verbindungen der Formel I gemäss Anspruch 1, dadurch gekennzeichnet, dass man eine Verbindung der Formel IX

(IX) 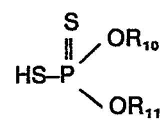 ,

worin $R_{10}$ und $R_{11}$ die im Anspruch 1 angegebene Bedeutung haben, in an sich bekannter Weise an ein Alken der Formel X

(X) 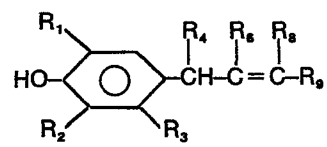 ,

worin die Symbole $R_1$, $R_2$, $R_3$, $R_4$, $R_6$, $R_8$ und $R_9$ die im Anspruch 1 angegebene Bedeutung haben, addiert.

**Claims**

1. A compound of the general formula I

(I) 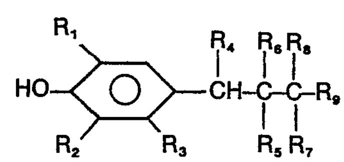

wherein $R_1$ and $R_2$ independently of one another are each $C_1$–$C_{12}$-alkyl, or they are phenyl, $C_7$–$C_9$-aralkyl or $C_5$–$C_7$-cycloalkyl each of which is unsubstituted or substituted by 1 to 3 alkyl groups having a total of 1 to 12 C atoms, $R_2$ in addition being hydrogen or chlorine, $R_3$ is hydrogen or methyl, $R_4$, $R_6$ and $R_8$ independently of one another are each hydrogen or $C_1$–$C_{20}$-alkyl, with the proviso that $R_4$, $R_6$ and $R_8$ as alkyl groups contain all together 1 to 20 C atoms, $R_9$ is hydrogen, methyl or halogen, and one of the radicals $R_5$ and $R_7$ is a group of the formula II

(II) 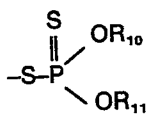

and the other is hydrogen, wherein $R_{10}$ and $R_{11}$ independently of one another are each $C_1$–$C_{30}$-alkyl or $C_2$–$C_{10}$-alkoxyalkyl, or $R_{10}$ and $R_{11}$ together are a group of the formula III

$$-(R_{12})C(R_{13})-[(R_{14})C(R_{15})]_m-(R_{16})C(R_{17})- \quad (III)$$

wherein m is nought or 1, and $R_{12}$, $R_{13}$, $R_{14}$, $R_{15}$, $R_{16}$ and $R_{17}$ independently of one another are each hydrogen or methyl.

2. A compound according to Claim 1 of the formula I wherein $R_1$ and $R_2$ independently of one another are each $C_1$–$C_8$-alkyl, and $R_2$ in addition is hydrogen, $R_3$ is hydrogen or methyl, $R_4$, $R_6$ and $R_8$ independently of one another are each hydrogen or $C_1$–$C_6$-alkyl, with the proviso that $R_4$, $R_6$ and $R_8$ as alkyl groups have all together 1 to 6 C atoms, $R_9$ is hydrogen, and one of the radicals $R_5$ and $R_7$ is a group of the formula II and the other is hydrogen, wherein $R_{10}$ and $R_{11}$ independently of one another are each $C_1$–$C_{22}$-alkyl, or $R_{10}$ and $R_{11}$ together are a group of the formula III wherein m and $R_{12}$ to $R_{17}$ have the meanings given in Claim 1.

3. A compound according to Claim 1 of the formula I wherein $R_1$ is tert-butyl, tert-amyl or 1,1,3,3-tetramethylbutyl, $R_2$ is $C_1$–$C_8$-alkyl, $R_3$ is hydrogen, $R_4$, $R_6$ and $R_8$ independently of one another are each hydrogen, methyl or ethyl, with the proviso that $R_4$, $R_6$ and $R_8$ as alkyl groups have 1 to 2 C atoms, $R_9$ is hydrogen, and one of the radicals $R_5$ and $R_7$ is a group of the formula II and the other is hydrogen, whereby $R_{10}$ and $R_{11}$ independently of one another are each $C_1$–$C_{22}$-alkyl, or together are a group of the formula III, wherein m and $R_{12}$ to $R_{17}$ have the meanings defined in Claim 1.

4. A compound according to Claim 1 of the formula I wherein two of the radicals $R_4$, $R_6$ and $R_8$ are hydrogen, and the third is methyl.

5. A compound according to Claim 1 of the formula I wherein one of the radicals $R_4$, $R_6$ and $R_8$ is hydrogen, and the other two are methyl.

6. A compound according to Claim 4 of the formula I wherein $R_4$ is methyl, and $R_6$ and $R_8$ are hydrogen.

7. A compound according to Claim 4 of the formula I wherein $R_6$ is methyl, and $R_4$ and $R_8$ are hydrogen.

8. A compound according to Claim 4 of the formula I wherein $R_8$ is methyl, and $R_4$ and $R_8$ are hydrogen.

9. Compounds according to claim 1 of formulae

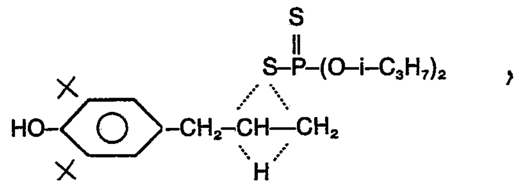

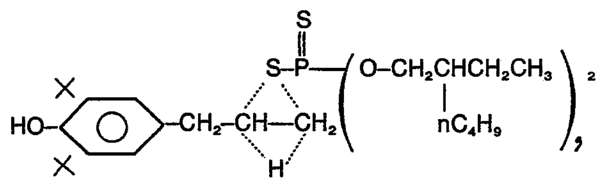

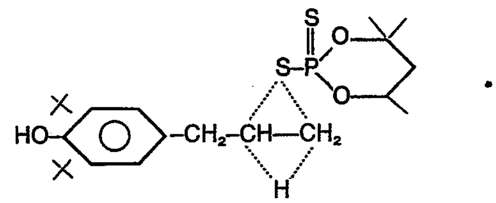

10. A lubricant containing a compound of the formula I according to Claim 1.

11. A process for producing a compound of the formula I according to Claim 1, which process comprises the addition reaction, in a manner known per se, of a compound of the formula IX

(IX) 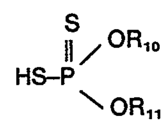 ,

wherein $R_{10}$ and $R_{11}$ have the meanings defined in Claim 1, with an alkene of the formula X

(X) 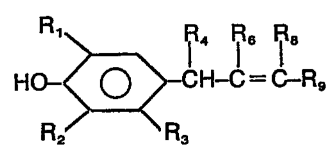 ,

wherein the symbols $R_1$, $R_2$, $R_3$, $R_4$, $R_6$, $R_8$ and $R_9$ have the meanings defined in Claim 1.

**Revendications**

1. Composés répondant à la formule générale I

(I) 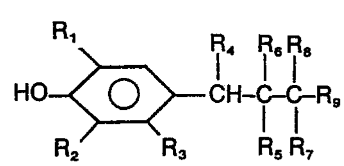

dans laquelle

$R_1$ et $R_2$ représentent chacun, indépendamment l'un de l'autre, un alkyle en $C_1$–$C_{12}$, un radical phényle, aralkyle en $C_7$–$C_9$ ou cyclo-alkyle en

$C_5$–$C_7$ éventuellement porteur de 1 à 3 alkyles contenant ensemble en tout de 1 à 12 atomes de carbone, $R_2$ pouvant en outre représenter l'hydrogène ou le chlore,

$R_3$ représente l'hydrogène ou un méthyle,

$R_4$, $R_6$ et $R_8$ représentent chacun, indépendamment les uns des autres, l'hydrogène ou un alkyle en $C_1$–$C_{20}$, avec la condition que $R_4$, $R_6$ et $R_8$, en tant qu'alkyles, contiennent ensemble au total de 1 à 20 atomes de carbone,

$R_9$ représente l'hydrogène, un méthyle ou un halogène et l'un des symboles $R_5$ et $R_7$ représente l'hydrogène et l'autre un radical répondant à la formule II

(II) 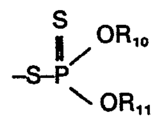

dans laquelle $R_{10}$ et $R_{11}$ représentent chacun, indépendamment l'un de l'autre, un alkyle en $C_1$–$C_{30}$ ou un alcoxyalkyle en $C_2$–$C_{10}$, ou $R_{10}$ et $R_{11}$ forment ensemble un radical répondant à la formule III

$$-(R_{12})C(R_{13})-[(R_{14})C(R_{15})]_m-(R_{16})C(R_{17})- \quad (III)$$

dans laquelle m est égal à 0 ou à 1 et $R_{12}$, $R_{13}$, $R_{14}$, $R_{15}$, $R_{16}$ et $R_{17}$ représentent chacun, indépendamment les uns des autres, l'hydrogène ou un méthyle.

2. Composés de formule I selon la revendication 1 dans lesquels $R_1$ et $R_2$ représentent chacun, indépendamment l'un de l'autre, un alkyle en $C_1$–$C_8$, $R_2$ pouvant en outre représenter l'hydrogène, $R_3$ représente l'hydrogène ou un méthyle, $R_4$, $R_6$ et $R_8$ représentent chacun, indépendamment les uns des autres, l'hydrogène ou un alkyle en $C_1$–$C_6$, avec la condition que $R_4$, $R_6$ et $R_8$, en tant qu'alkyles, renferment ensemble au total de 1 à 6 atomes de carbone, $R_9$ représente l'hydrogène, et l'un des symboles $R_5$ et $R_7$ représente l'hydrogène tandis que l'autre représente un radical de formule II dans lequel $R_{10}$ et $R_{11}$ représentent chacun, indépendamment l'un de l'autre, un alkyle en $C_1$–$C_{22}$ ou forment ensemble un radical de formule III dans lequel m et $R_{12}$ à $R_{17}$ ont les significations données à la revendication 1.

3. Composés de formule I selon la revendication 1 dans lesquels $R_1$ représente un radical tert-butyle, tert-pentyle ou tétraméthyl-1,1,3,3 butyle, $R_2$ un alkyle en $C_1$–$C_8$, $R_3$ l'hydrogène, $R_4$, $R_6$ et $R_8$ représentent chacun, indépendamment les uns des autres, l'hydrogène, un méthyle ou un éthyle, avec la condition que $R_4$, $R_6$ et $R_8$, en tant qu'alkyles, contiennent au total 1 ou 2 atomes de carbone, $R_9$ représente l'hydrogène, et l'un des symboles $R_5$ et $R_7$ représente l'hydrogène tandis que l'autre représente un radical de formule II dans lequel $R_{10}$ et $R_{11}$ représentent chacun, indépendamment l'un de l'autre, un alkyle en $C_1$–$C_{22}$ ou forment ensemble un radical de formule III dans lequel m et $R_{12}$ à $R_{17}$ ont les significations données à la revendication 1.

4. Composés de formule I selon la revendication 1 dans lesquels deux des symboles $R_4$, $R_6$ et $R_8$ représentent chacun l'hydrogène et le troisième représente un méthyle.

5. Composés de formule I selon la revendication I dans lesquels l'un des symboles $R_4$, $R_6$ et $R_8$ représente l'hydrogène et les deux autres représentent chacun un méthyle.

6. Composés de formule I selon la revendication 4 dans lesquels $R_4$ représente un méthyle et $R_6$ et $R_8$ représentent chacun l'hydrogène.

7. Composés de formule I selon la revendication 4 dans lesquels $R_6$ représente un méthyle et $R_4$ et $R_8$ représentent chacun l'hydrogène.

8. Composés de formule I selon la revendication 4 dans lesquels $R_8$ représente un méthyle et $R_4$ et $R_6$ représentent chacun l'hydrogène.

9. Composés selon la revendication 1 qui répondent aux formules suivantes:

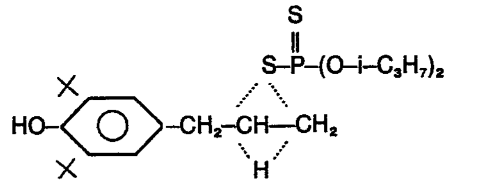

,

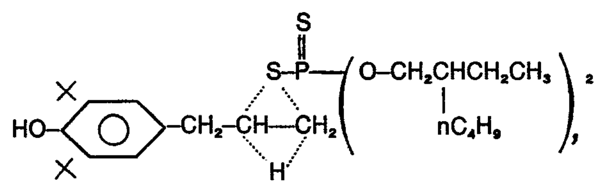

,

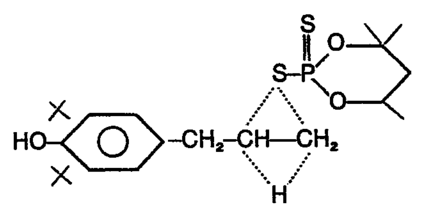

.

10. Lubrifiant contenant un composé de formule I selon la revendication 1.

11. Procédé de préparation de composés de formule I selon la revendication 1, procédé caractérisé en ce qu'on fixe un composé répondant à la formule IX

(IX) 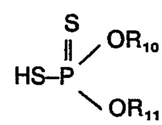 ,

dans laquelle $R_{10}$ et $R_{11}$ ont les significations données à la revendication 1, de manière connue, sur un alcène répondant à la formule X

(X) 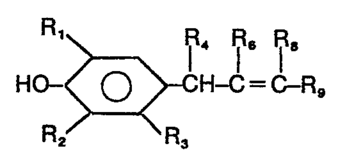 ,

dans laquelle $R_1$, $R_2$, $R_3$, $R_4$, $R_6$, $R_8$ et $R_9$ ont les significations données à la revendication 1.